**Europäisches Patentamt**

**European Patent Office**

**Office européen des brevets**

(19)

(11) Numéro de publication : **0 524 077 A1**

# (12) DEMANDE DE BREVET EUROPEEN

(21) Numéro de dépôt : **92402019.1**

(22) Date de dépôt : **10.07.92**

(51) Int. Cl.$^5$ : **G06F 9/44,** G06F 9/46

(30) Priorité : **16.07.91 FR 9108983**

(43) Date de publication de la demande :
**20.01.93 Bulletin 93/03**

(84) Etats contractants désignés :
**AT BE CH DE ES FR GB IT LI NL SE**

(71) Demandeur : **ALCATEL N.V.**
**Strawinskylaan 341**
**NL-1077 XX Amsterdam (NL)**
(84) **BE CH DE ES GB IT LI NL SE AT**

(71) Demandeur : **ALCATEL CIT**
**12 Rue de la Baume**
**F-75008 Paris (FR)**
(84) **FR**

(72) Inventeur : **Bercis, Dominique**
**Lotissement du Trégor**
**F-22560 Pleumeur Bodou (FR)**
Inventeur : **Collet, Edouard**
**10, rue Ile Bono, Louannec**
**F-22700 Perros Guirec (FR)**

(74) Mandataire : **Sciaux, Edmond et al**
**c/o SOSPI, 14-16 rue de la Baume**
**F-75008 Paris (FR)**

(54) **Structure de logiciel pour système de traitement d'informations.**

(57)    Cette structure de logiciel pour système de traitement d'informations, notamment pour un système ayant un gros volume de logiciel, et travaillant en temps réel, comporte :
— une couche (SE) appelée couche service qui comporte des modules fonctionnels de traitement dits modules fonctionnels d'application ;
— une couche (SY) appelée couche système, qui comporte des modules fonctionnels de traitement, dits modules fonctionnels de système.
Les modules fonctionnels d'application ne comportent aucun élément qui soit fonction des modules fonctionnes de système, ou de l'architecture matérielle du système.
La couche système (SY) assure :
— le routage de messages échangés entre des modules fonctionnels d'application (CTSC, COSP) ;
— la gestion de la répartition et de la dupliaction des modules fonctionnels d'application dans le système ;
— l'attribution de références (x4, y4) à des processus transactionnels entre modules fonctionnels d'application, et la gestion de ces références ;
— la sécurisation des contextes des modules fonctionnels d'application ;
— la traduction d'une panne système en panne de service.
Application aux logiciels des systèmes de télécommunications.

FIG.1

L'invention concerne une structure de logiciel pour système de traitement d'informations, notamment pour un système ayant un gros volume de logiciel et travaillant en temps réel, par exemple un système de télécommunications. La structure du logiciel de tels systèmes de télécommunications est généralement fonctionnelle, c'est-à-dire comporte des modules fonctionnels traitant des données qui leur sont extérieures. On distingue des modules appelés modules fonctionnels du logiciel de base du système, qui sont essentiellement fonctions de caractéristiques internes au système (nombre de processeurs, type de processeur, type de système d'exploitation, etc.); et des modules appelés modules fonctionnels d'application, qui sont essentiellement fonctions de caractéristiques externes au système. Par exemple, un module fonctionnel d'application remplit la fonction de traitement d'appel, un autre remplit la fonction de gestion des abonnés, etc.

Les modules fonctionnels comportent en général des éléments qui sont fonctions de la structure matérielle du système ou des modules fonctionnels du logiciel de base du système. Par exemple, ces éléments définissent : une répartition des traitements dans une pluralité de processeurs, des adresses de différents sous-ensembles matériels constituant le système, etc.Classiquement, les modules fonctionnels d'application comportent en outre des éléments relatifs à la communication entre ces modules, notamment des temporisations fonctions de la structure matérielle du système. En particulier, les modules fonctionnels qui assurent différentes parties d'un service de télécommunications comportent de tels éléments qui sont étrangers au service proprement dit.

Leur dépendance vis-à-vis de l'architecture matérielle et des modules fonctionnels du logiciel de base du système pose d'importants problèmes pour la maintenance et l'évolution des modules fonctionnels d'application : toute évolution de l'architecture matérielle et des modules fonctionnels du logiciel de base nécessite une modification des modules fonctionnels de service. D'autre part, l'écriture et la maintenance des modules fonctionnels d'application est beaucoup compliquée par : la prise en compte de la répartition des traitements dans le système; les temporisations de communication, etc.

Le but de l'invention est de proposer une structure de logiciel permettant de masquer aux modules fonctionnels d'application toutes les caractéristiques de l'architecture matérielle et des modules fonctionnels du logiciel de base du système.

L'objet de l'invention est une structure de logiciel pour système de traitement d'informations, notamment pour un système ayant un gros volume de logiciel, et travaillant en temps réel, caractérisée en ce qu'elle comporte :

- une couche appelée couche service qui comporte des modules fonctionnels de traitement, dits modules fontionnels d'application;
- une couche appellée couche système, qui comporte des modules fonctionnels de traitement, dits modules fonctionnels de système;
- en ce que les modules fonctionnels d'application ne comportent aucun élément qui soit fonction des modules fonctionnels de système, ou de l'architecture matérielle du système ;
- et en ce que la couche système assure :
- le routage de messages échangés entre des modules fonctionnels d'application;
- la gestion de la répartition et de la duplication des modules fonctionnels d'application dans le système;
- l'attribution de références à des processus transactionnels entre modules fonctionnels d'application, et la gestion de ces références;
- la sécurisation des contextes des modules fonctionnels d'application.

La structure logicielle ainsi caractérisée rend les modules fonctionnels d'application indépendants des caractéristiques des modules fonctionnels du logiciel de base, et des caractéristiques de l'architecture matérielle du système : les modules fonctionnels d'application peuvent être spécifiés comme si le système était mono-processeur, puisque ces modules sont indépendants de la répartion et de la duplication des traitements à l'intérieur du système; et comme si le système était mono-transactionnel puisqu'il n'y a pas de gestion explicite des références de processus transactionnel dans les modules fonctionnels d'application, cette gestion étant réalisée dans les modules fonctionnels de la couche système. Les modules fonctionnels d'application ignorent les problèmes liés à la communication entre eux, et les problèmes liés à la sécurisation des contextes puisque le routage des messages, et cette sécurisation, sont assurées par la couche système.

Puisque la couche service est nettement séparée de la couche système, elle est plus simple. Ceci facilite l'addition de nouveaux services; mais surtout il est possible d'implanter la couche service sur diverses architectures matérielles sans modifier cette couche service.

Selon une autre caractéristique, la couche service est structurée par objets, chaque module fonctionnel d'application étant un objet comportant des données et des programmes appliquant des procédures utilisant ces données. Chaque objet est associé à d'autres objets, par des relations qui le situent structurellement. La couche système route les messages inter-objets en déterminant l'identité d'un objet destinataire en fonction d'une étiquette identifiant chaque message au niveau de la couche service, et en fonction des relations associant tous les objets de la couche service; et détermine l'adresse physique de l'objet destinataire, en fonction de la répartition des objets dans l'architecture matérielle.

Cette structuration par objets facilite le développement et l'évolution de la couche service et de la couche système d'un logiciel, tout en étant compatible avec l'utilisation d'un langage procédural, CHILL par exemple, qui est utilisé couramment pour le développement des systèmes de télécommunications afin de permettre un fonctionnement du système en temps réel. En outre, la structuration par objets apporte pour avantages : la facilité d'introduction d'un nouvel objet, notamment pour introduire de nouveaux services de télécommunications dans la couche service. Ce nouvel objet est intégré dans un objet déjà existant, grâce à une relation dite d'inclusion. Celle-ci permet de modifier l'organisation interne de certains objets sans que cela ait un impact sur d'autres objets qui sont des utilisateurs des objets modifiés. L'organisation interne d'un objet n'est connue que par la description de la relation d'inclusion correspondant à cet objet, et cette description n'a pas à être connue par les objets utilisateurs.

Selon une autre caractéristique, la couche système assure en outre la réservation de ressources du système pour plusieurs processus transactionnels parallèles correspondant à des types différents d'activité, en discriminant des messages envoyés de la couche service à la couche système et correspondant à ces différents types d'activité.

La structure ainsi caractérisée libère la couche service de la tâche de réservation des ressources du système pour différentes activités, par conséquent la couche service peut ignorer complètement les caractéristiques des ressources du système.

Selon une autre caractéristique, la couche système assure en outre un mode de fonctionnement particulier du système, en cas de panne partielle de celui-ci, en envoyant aux modules concernés par la panne, dans la couche service, un message correspondant aux implications de cette panne dans la couche service.

La structure ainsi caractérisée permet de traduire une panne de l'architecture matérielle sous la forme d'une panne de la couche service. La couche service réagit ensuite à cette panne par un traitement approprié, sans avoir à connaître l'architecture matérielle.

L'invention sera mieux comprise et d'autres caractéristiques apparaîtront à l'aide de la description ci-dessous et des figures l'accompagnant :
- la figure 1 représente schématiquement un exemple de logiciel structuré par objets et ayant la structure selon l'invention;
- les figures 2 et 3 illustrent le routage des messages inter-objets, et la gestion de la répartition et de la réplication des modules fonctionnels d'application, dans cet exemple de logiciel;
- la figure 4 illustre la gestion d'une pluralité de processus transactionnels en parallèle, dans cet exemple de logiciel.

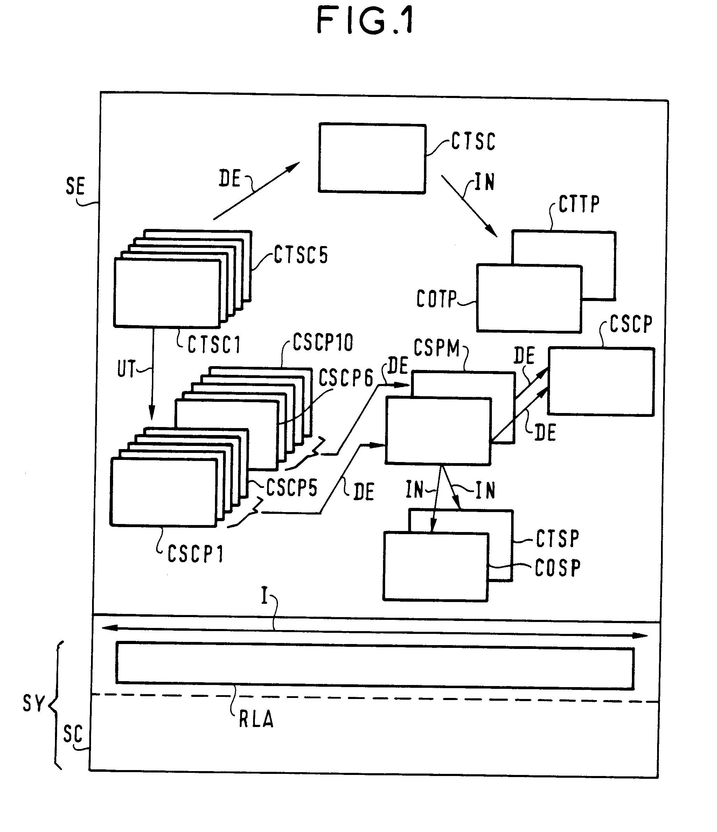

La figure 1 représente schématiquement les deux couches du logiciel d'un exemple de système de télécommunications, ce logiciel étant structuré conformément à l'invention. Il comporte une couche appelée couche de service, SE, et une couche appelée couche système, SY. La couche service est structurée par objets. Elle est constituée d'une pluralité d'objets appelés "objets services". Chaque objet comprend des données et des procédures. Ces procédures peuvent constituer un algorithme, un système de manipulation, un automate à états finis, etc. Les données modifiables d'un objet sont appelées contexte de cet objet.

La notion classique d'appel de procédure est remplacée par la notion de transmission de message. Chaque message contient un ordre qui doit être exécuté par un ou plusieurs objets destinataires.

Chaque objet est situé structurellement par rapport aux autres, par des relations qui peuvent être notamment :
- la relation d'utilisation, qui s'exprime par la locution "est utilisé par "; par exemple "composante-parole" est utilisée par "service-point-à-point";
- la relation de dépendance, ou d'héritage qui s'exprime par la locution "est un"; par exemple "composante-point-à-point" est une "composante-de-service"; cette relation impliquant que les opérations associées à l'objet dépendant peuvent être exécutées par le logiciel réalisant les fonctions de l'objet dont il dépend, et cette relation permettant l'opération de factorisation d'un logiciel, c'est-à-dire la mise en commun d'un logiciel;
- la relation d'inclusion, qui s'exprime par la locution "est inclus dans"; et qui permet d'encapsuler, dans un objet, des objets plus élémentaires afin de masquer l'organisation de ces objets plus élémentaires tout en conservant une possibilité d'accès individuel, par exemple l'objet "service-de-télécommunications" englobe les objets "service-entrant-local" et "service-sortant-local".

Un objet est dit réel lorsqu'il n'est pas un objet incluant un autre objet ou une pluralité d'autres objets. Dans le cas contraire, il est appelé objet virtuel. Cet exemple de logiciel de système de télécommunications est écrit en langage CHILL qui est un langage classique pour cet usage et qui permet un fonctionnement en temps réel. La couche système, SY, comporte essentiellement : un objet, RLA, assurant la communication entre tous les objets de la couche service, SE; et une sous-couche SC constituée de modules fonctionnels du logiciel de base, notamment le système d'exploitation du système. Sur les figures les relations d'utilisation, la relation de dépendance, et la relation d'inclusion sont notées respectivement UT, DE, IN.

La configuration fonctionnelle du système est définie par l'ensemble des relations inter-objets, la couche système SY ayant une connaissance formelle de cette configuration, sous la forme de tables, alors que la couche service (SE) a une connaissance sémantique de cette configuration.

Dans cet exemple, la couche service SE comporte :
- cinq objets CTSC1,..., CTSC5 qui sont dépendants d'un objet CTSC lequel inclut deux objets COTP et CTTP;
- cinq objets CSCP1,...,CSCP5 qui dépendent d'un objet CSPP;
- cinq objets CSCP6,..., CSCP10 qui dépendent d'un objet CSPM;
- un objet CSCP;
- un objet CTSP;
- un objet COSP;

Les objets CSPM et CSPP dépendent tous les deux de l'objet CSCP. L'objet CSPP inclut l'objet COSP et l'objet CTSP.

Les objets communiquent par des messages, sans que l'objet expéditeur d'un message doive connaître le nom ni l'organisation interne de l'objet destinataire qui exécutera une opération commandée par le message. La couche système SY utilise la connaissance formelle des relations inter-objets pour détecte'miner le nom et l'adresse physique de l'objet destinataire. Ainsi, le texte de la couche service ne comporte aucun nom de module fonctionnel du logiciel de base, et aucun nom se rapportant à l'architecture matérielle du système.

La communication entre la couche service SE et la couche système SY est assurée par une interface I comportant notamment les primitives suivantes, dans le sens couche service SE vers couche système SY :
- ouverture de transaction;
- transfert de données;
- fermeture de transaction;
- abandon de transaction;
- point de reprise;
et dans le sens allant de la couche système SY vers la couche service SE :
- ouverture d'activité;
- indication de transfert de message;
- indication de panne.

Chaque message inter-objets comporte une en-tête et des paramètres. Ces diverses primitives nécessitent des paramètres différents dans les messages. L'entête est constitué de quatre champs contenant respectivement :
- une identité d'objet;
- une identité de point d'accès à un service;
- une identité d'opération;
- et une identité de type de requête.

L'identité d'objet dépend du type de la relation ou de la composition de relations entre l'objet expéditeur du message et l'objet destinataire. Des exemples seront donnés plus loin.

Chaque objet est accessible par un ou plusieurs ports appelés points d'accès au service, non représentés sur les figures. L'identité de point d'accès à un service permet de sélectionner un port parmi différents ports, que comporte l'objet identifie par le premier champ. L'identité d'opération désigne l'une des opérations possibles dans l'objet destinataire. L'identité de type de requête, désigne la phase courante dans un processus transactionnel comprenant plusieurs phases possibles : requête; accusé de réception de requête; rejet de requête;confirmation positive; rejet; indication; accusé de réception d'indication; rejet d'indication; réponse; rejet de réponse; accusé de réception de réponse etc. L'en-tête de messages peut se limiter à trois octets, par exemple, alors que les paramètres qui suivent peuvent être beaucoup longs. La structure des paramètres est determinée par l'en-tète du message et, en particulier, par l'identité d'opération et l'identité de type de requête.

Le tableau ci-dessous indique, à titre d'exemple, les différentes primitives utilisées lors du dialogue inter-objets, c'est-à-dire les différents types possibles d'échanges entre un objet expéditeur et un objet destinataire qui sont respectivement un objet utilisateur et un objet utilisé, ou l'inverse.

Dans le cas de la relation utilisation, le champ objet contient toujours l'identité de l'objet utilisé, au départ du message et après son transit dans la couche système.

| Type de requête | contenu du champ objet au départ | contenu du champ type de requête | contenu du champ paramètres |
|---|---|---|---|
| Demande d'éxécution utilisateur →utilisé | identité de l'objet utilisé | Requête | paramètres transmis à l'objet utilisé |
| Acquittement d'une deman-de utilisé→ utilisateur | identité de l'objet utilisé | Accusé de réception de requête | paramètres trans-mis à l'objet utilisateur |
| Rejet ou refus d'exécution utilisé ⟶ utilisateur | identité de l'objet utilisé | Rejet | Causes du rejet |
| Indication spontanée utilisé⟶ utilisateur | identité de l'objet utilisé | Indication | paramètres trans-mis à l'objet utilisateur |
| réception d'indication utilisé⟶ utilisateur | identité de l'objet utilisé | Accusé de réception d'indication | Néant |

Dans le cas de la relation d'inclusion, l'identité d'un objet incluant constitue l'identité d'objet contenue dans l'en-tête du message au départ de l'objet expéditeur. Après le transit dans la couche système SY, cette identité d'objet est remplacée par l'identité de l'objet inclus. Dans le cas de la relation de dépendance, l'identité d'un objet dit dépendant constitue l'identité d'objet contenue dans l'en-tête du message au départ de objet expéditeur. Après le transit dans la couche système SY, cette identité d'objet est remplacée par l'identité d'un objet plus général. Dans le cas où l'objet expéditeur et l'objet destinataire sont reliés par plusieurs relations composées, l'identité d'objet contenue dans l'en-tête du message est fonction des relations composées. Par exemple, si un premier objet, expéditeur du message, utilise un deuxième objet qui inclut un troisième objet, destinataire du message, l'identité d'objet contenue dans l'en-tête du message, au départ, est celle du deuxième objet; puis est celle du troisième objet, après le transit du message dans la couche système SY, c'est-à-dire après l'opération de routage réalisée par l'objet RLA.

Après avoir déterminé l'Identité de l'objet destinataire, en fonction du contenu des quatre champs de l'entête du message, l'objet RLA détermine l'adresse physique du processeur sur lequel est implémenté cet objet.

Cette adresse physique est rajoutée comme préfixe au message pour le router dans le système jusqu'au processeur concerné.

Un processus transactionnel peut être constitué, par exemple, d'une demande suivie d'un accusé de réception de demande, puis suivie d'une indication d'exécution. Ces primitives sont fournies par la couche système SY et constituent une interface I permettant la communication inter-objets par l'intermédiaire de l'objet RLA appartenant à la couche système SY.

Par exemple, l'objet CTSC5, qui est une composante dépendante de l'objet CTSC, "service-de-télécommunications", émet un message dont le champ objet contient CSCP2; dont le champ type de requête contient "requête"; dont le champ opération contient "opération A"; et dont le champ paramètres contient la nature exacte de cette requête. Selon les apparences, ce message est émis par l'objet CTSC5 pour utiliser l'objet CSCP2. Ce message transite dans l'objet RLA chargé de la communication inter-objets. L'objet RLA sait, par une table, que l'objet CTSC5 est dépendant de l'objet CTSC et que celui-ci inclut les objets COTP et CTTP. Par ailleurs, l'objet RLA sait par une table que l'objet CSCP2 dépend de l'objet CSPP qui inclut les objets COSP et CTSP. L'objet RLA sait, par une table, que l'opération A est réalisée par l'objet COSP. L'objet RLA conclut que ce message a pour but d'activer l'utilisation de l'objet COSP par l'objet COTP. L'objet RLA décide donc de router le message depuis le processeur sur lequel est implémenté l'objet COTP, et vers le processeur, ou les processeurs, sur lequel est implémenté l'objet COSP ou plusieurs répliques de l'objet COSP. L'objet RLA consulte des tables indiquant la répartition des objets dans les différents processeurs constituant l'architecture matérielle du système. Par exemple, il constate : l'objet CTSC5 est virtuel; que l'objet expéditeur est en fait COTP; que l'objet COTP est implémenté sur P1; et que l'objet COSP est implémenté dans un processeur P2 et est répliqué dans un processeur P3. Cette répartition des objets dans les processeurs du système est réalisée de manière classique, en fonction de la charge de chacun des processeurs, par des modules fonctionnels du logiciel de base du système. Dans cet exemple, l'objet RLA achemine le message du processeur P1 vers les processeurs P2, P3.

Considérons un autre exemple où le même objet CTSC5 émet un message dont le champ objet contient CSCP2 et pour idendité d'opération "opération B", et qui semble donc traduire l'utilisation de l'objet CSCP2 par l'objet CTSC5. En réalité, l'objet RLA route ce message depuis l'objet COTP vers l'objet CTSP, car l'objet RLA sait par une table que l'objet CSCP2 dépend de l'objet CSPP qui inclut les objets COSP et CTSP, et parce qu'il sait, par une table, que l'opération B est réalisée par CTSP. Le contenu de l'en-tête et des paramètres du message l'amènent à conclure que l'objet destinataire est en fait CTSP plutôt que COSP, dans cet exemple.

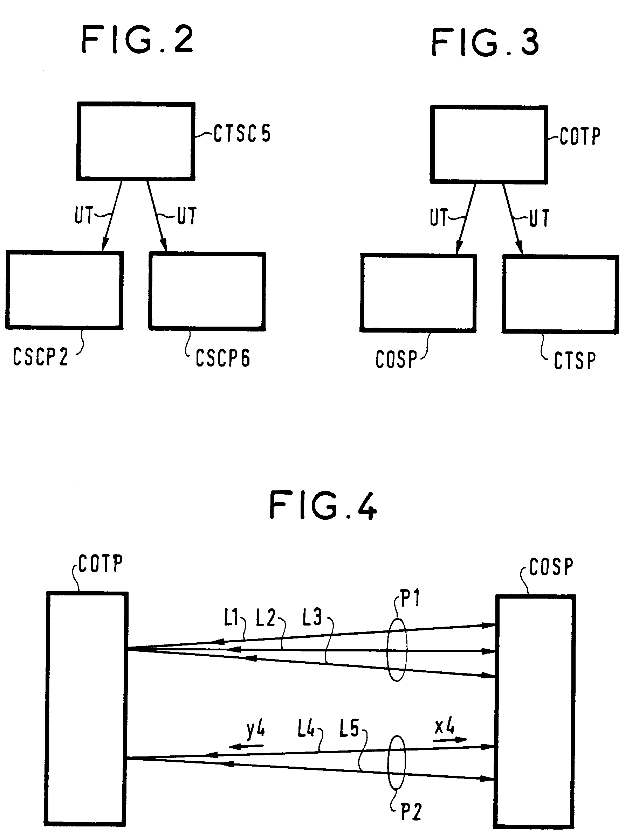

Les figures 2 et 3 représentent respectivement l'apparence et la réalité du routage de ces deux exemples de message. Apparemment l'objet CTSC5 envole deux messages d'utilisation à CSCP2, et en réalité tout se passe comme si les deux messages allaient de COTP à COSP et à CTSP respectivement.

Naturellement, l'objet RLA doit réaliser ce routage des messages inter-objets à une vitesse suffisante pour permettre le fonctionnement en temps réel pour l'ensemble du logiciel. La réalisation d'un objet RLA remplissant la fonction décrite ci-dessus en temps réel est à la portée de l'homme de l'art.

Les objets de la couche service SE ignorent les problèmes liés à la communication inter-objet telle que la surveillance d'une réponse au moyen d'un temporisateur, car ces problèmes sont traités au niveau de la couche système SY, au cours du transit des messages.

De même , puisque c'est l'objet RLA de la couche système SY qui détermine l'adresse physique de chaque destinataire, les objets de la couche service SE ignorent les problèmes liés à la répartition et à la réplication du traitement dans plusieurs processeurs. Ces objets sont donc écrits en considérant que le système est monoprocesseur.

L'objet RLA assure en outre la sécurisation des contextes des objets de la couche service SE. Chaque fois qu'un objet de la couche service a atteint un état stable, il envole un message appelé "point de reprise" à l'objet RLA, qui en déduit qu'il peut lire le contexte de l'objet ayant émis le message et le stocker sur un disque dur par exemple afin de le protéger contre tout incident du fonctionnement du système.

L'objet RLA assure en outre l'attribution de référence à des processus transactionnels entre des objets de la couche de service SE, et la gestion de ces références, les objets de la couche service utilisant aveuglément les références attribuées.

La figure 4 illustre un exemple de deux processus transactionnels se déroulant en parallèle. Deux processus transactionnels P1 et P2 se déroulent simultanément entre les objets COTP et COSP qui sont les objets réellement exécutants de deux logiques de traitement réalisant ces processus P1 et P2. Chacun de ces processsus est constitué en fait de plusieurs liens : L1, L2, L3 constituent le processus transactionnel P1; et L4, L5 constituent le processus transactionnel P2. L'objet RLA attribue une référence à chaque message, pour repérer le lien et le sens de transmission du message sur ce lien. Par exemple, un message envoyé de l'objet COTP à l'objet COSP sur le lien L4 sera toujours accompagné d'une référence x4; et un message envoyé en sens inverse sur le lien L4 sera toujours accompagné d'une référence y4. Les objets COTP et COSP mémorisent ces références et les utilisent pour distinguer les messages apportés par les différents liens, mais ils n'ont pas à s'occuper de l'attribution et de la gestion de ces références. Par conséquent, les logiques de traitement correspondant à ces différents processus transactionnels sont écrites comme si le logiciel de la couche de service SE était monotransactionnel.

L'objet RLA se charge en outre de la sécurisation des contextes de ces processus transactionnels. Il distingue différents types d'activité. Il détermine le type d'activité correspondant à chaque processus transactionnel P1, P2, d'après le contenu des messages échangés sur les liens constituant respectivement ces processus transactionnels. D'après le type d'activité d'un processus, l'objet LRA en déduit le type de contexte associé à ce processus, et donc en déduit les ressources de mémoire à réserver pour sécuriser le contexte de ce processus transactionnel. Les objets d'application de la couche service SE n'ont donc pas à s'occuper des problèmes d'attribution de ressources du système pour chacun de ces processus transactionels.

La couche système SY assure en outre un mode de fonctionnement particulier du système, en cas de panne partielle de celui-ci, sans que la couche de service n'ait à connaître l'architecture matérielle du système. Par exemple si l'objet COTP envoie un message à destination de l'objet COSP, réellement destinataire, et si la couche système SY détecte une anomalie empêchant d'acheminer ce message jusqu'à l'objet COSP, l'objet RLA envoie un message à l'objet COTP, en le structurant comme les autres messages inter-objets, décrits précédemment. Ce message signale une anomalie, et il contient des paramètres fonctions du type d'anomalie et traduisant l'anomalie du système en une anomalie du service : perte d'accès à l'objet COSP.

Chaque anomalie de l'architecture matérielle ou des modules fonctionnels du logiciel de base, ayant des implications en termes de service, est ainsi interprétable et exploitable par la couche service sans qu'elle ait à connaître l'architecture matérielle ni les modules fonctionnels du logiciel de base.

## Revendications

**1)** Structure de logiciel pour système de traitement d'informations, notamment pour un système ayant un gros volume de logiciel, et travaillant en temps réel, caractérisée en ce qu'elle comporte :
- une couche (SE) appelée couche service qui comporte des modules fonctionnels de traitement dits modules fonctionnels d'application;
- une couche (SY) appellée couche système, qui comporte des modules fonctionnels de traitement, dits modules fonctionnels de système;
    en ce que les modules fonctionnels d'application ne comportent aucun élément qui soit fonction des modules fonctionnels de système, ou de l'architecture matérielle du système ;
    et en ce que la couche système (SY) assure :
- le routage de messages échangés entre des modules fonctionnels d'application (CTSC, COSP);
- la gestion de la répartition et de la duplication des modules fonctionnels d'application dans le système;
- l'attribution de références (x4, y4) à des processus transactionnels entre modules fonctionnels d'application, et la gestion de ces références;
- l'attribution et la sécurisation des contextes des modules fonctionnels d'application.

**2)** Structure de logiciel selon la revendication 1, caractérisée en ce que la couche service (SE) est structurée par objets, chaque module fonctionnel d'application étant un objet comportant des données et des programmes appliquant des procédures utilisant ces données;
    en ce que chaque objet est associé à d'autres objets, par des relations qui le situent structurellement;
    et en ce que la couche système (SE) route les messages inter-objets en déterminant l'identité d'un objet destinataire en fonction d'une étiquette identifiant chaque message au niveau de la couche service, et en fonction des relations associant tous les objets de la couche service (SE); et déterminant l'adresse physique de l'objet destinataire, en fonction de la répartition des objets dans l'architecture matérielle.

**3)** Structure de logiciel selon la revendication 1, caractérisée en ce que la couche système (SY) assure en outre la réservation de ressources du système pour plusieurs processus transactionnels parallèles correspondant à des types différents d'activité, en identifiant le type d'activité de chaque processus, d'après le contenu des messages écharpés dans ce processus.

**4)** Structure de logiciel selon la revendication 1, caractérisé en ce que la couche système (SY) assure en outre un mode de fonctionnement particulier du système, en cas de panne partielle de celui-ci, en envoyant dans la couche service (SE), aux modules concernés par la panne, un message correspondant aux implications de cette panne dans la couche service.

# FIG.1

# FIG.2

# FIG.3

CTSC5

CSCP2          CSCP6

UT          UT

COTP

COSP          CTSP

UT          UT

# FIG.4

COTP                                      COSP

P1

L1  L2  L3

y4  L4  L5  x4

P2

**Office européen des brevets**

# RAPPORT DE RECHERCHE EUROPEENNE

Numero de la demande

EP    92 40 2019
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 405 829 (AT&T)<br>* abrégé *<br>* page 2, ligne 35 - page 3, ligne 10 *<br>* page 4, ligne 11 - page 5, ligne 2 *<br>* page 9, ligne 37 - page 10, ligne 19 *<br>* page 10, ligne 48 - page 12, ligne 18 *<br>* figures 1,2,9,11 *<br>--- | 1-3 | G06F9/44<br>G06F9/46 |
| A | TECHNIQUE ET SCIENCE INFORMATIQUES.<br>vol. 6, no. 2, 1987, NEUILY SUR SEINE, FR<br>pages 166 - 169<br>M. SHAPIRO ET AL. 'SOS: UN SYSTEME D'EXPLOITATION REPARTI FONDE SUR LES OBJETS'<br>* page 166, colonne de gauche, ligne 36 - colonne de droite, ligne 11 *<br>* page 166, colonne de droite, ligne 58 - page 169, colonne de gauche, ligne 30 *<br>* figures 1,2 *<br>--- | 1-3 | |
| A | MICROPROCESSING AND MICROPROGRAMMING.<br>vol. 24, no. 1-5, 1988, AMSTERDAM, NL<br>pages 257 - 265<br>K.W. PLESSMANN ET AL. 'CONCURRENT OBJECT-ORIENTED PROGRAM DESIGN IN REAL-TIME SYSTEMS'<br>* page 259, colonne de droite, ligne 38 - ligne 55 *<br>* page 260, colonne de gauche, ligne 1 - ligne 14 *<br>* page 260, colonne de gauche, ligne 59 - colonne de droite, ligne 20 *<br>* page 262, colonne de droite, ligne 18 - page 264, colonne de gauche, ligne 42 *<br>* figures 5,6 *<br>---<br>-/-- | 1-3 | **DOMAINES TECHNIQUES RECHERCHES (Int. Cl.5)**<br><br>G06F |

Le présent rapport a été établi pour toutes les revendications

| Lieu de la recherche | Date d'achèvement de la recherche | Examinateur |
|---|---|---|
| LA HAYE | 29 OCTOBRE 1992 | JONASSON J.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)

**Office européen des brevets**

# RAPPORT DE RECHERCHE EUROPEENNE

Numero de la demande

EP    92 40 2019
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IBM TECHNICAL DISCLOSURE BULLETIN. vol. 32, no. 10A, Mars 1990, NEW YORK, US page 104 'SYSTEM MANAGEMENT COMMANDS ARCHITECTURE' * le document en entier * ----- | 1,4 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 29 OCTOBRE 1992 | JONASSON J.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant